# EUROPEAN PATENT SPECIFICATION

(11) **EP 3 163 816 B1**
(45) Date of publication and mention of the grant of the patent: **03.07.2019**
(21) Application number: 16182995.7
(22) Date of filing: 05.08.2016
(51) Int. Cl.: H04L 12/801, H04N 19/176, H04L 12/851

(54) **A METHOD AND APPARATUS FOR CONTROLLING DOWNLINK OR UPLINK TRANSMISSION**
VERFAHREN UND VORRICHTUNG ZUR STEUERUNG VON DOWNLINK- ODER UPLINK-ÜBERTRAGUNG
PROCÉDÉ ET APPAREIL DE COMMANDE DE TRANSMISSION DE LIAISON MONTANTE OU DE LIAISON DESCENDANTE

(30) Priority: 27.10.2015 US 201514924420
(43) Date of publication of application: 03.05.2017
(73) Proprietor: Nokia Solutions and Networks Oy, 02610 Espoo (FI)
(72) Inventor: Harris, John, Whitefish Bay, WI Wisconsin 53217 (US); Turtinen, Samuli Heikki, 91100 Ii (FI)
(74) Representative: Nokia EPO representatives

(56) References cited:
- EP-A1- 2 804 441
- EP-A2- 1 881 711

## Description

### BACKGROUND:

### Field:

Various communication systems may benefit from the management of downlink and uplink traffic. For example, a user equipment and an access node may benefit from the selective purging of downlink data or uplink data.

### Description of the Related Art:

Due the ever increasing nature of video and audio streaming in modern communication systems, the amount of downlink traffic has risen sharply. A large percentage of this downlink traffic is made up of downlink transmissions that may have been abandoned. Users routinely request downloads which they then abruptly abandon before the download has completed. This creates an inefficient and wasteful environment where abandoned data lingers in the network as a significant contributor to downlink traffic, even after the user no longer wishes to continue the download.

Abandonment is rampant among users in communication systems. For example, numerous streaming videos are abandoned prior to completion of the download. Abandonment is not only restricted to video. Another prominent example is music. In the event that users who are streaming music do not like the current song being streamed, they simply fast-forward to the next song, without allowing the current song to fully download. In another example, a user of an internet browser may click to browse a new webpage prior to the current webpage completely downloading. Such user behavior not only leads to an increase in the amount of downlink traffic, but also directly leads to an increase in the amount of abandoned data in the downlink transmission.

Table 1 further illustrates the nature of these abandonments:

**Table 1: Just-in-Time Video Analysis for Short Video Clips**

| | | | | | |
|---|---|---|---|---|---|
| Average total duration of video clip (sec) | 180 | 180 | 180 | 180 | 180 |
| Abandonment probability | 20% | 30% | 45% | 50% | 58% |
| Typical abandonment time (sec) | 10 | 30 | 60 | 90 | 120 |
| media/video bit rate assumed (Kbps) | 300 | 300 | 300 | 300 | 300 |
| user throughput assumed (Kbps) | 2000 | 2000 | 2000 | 2000 | 2000 |
| Number of Seconds of Media Downloaded | 66.7 | 180.0 | 180.0 | 180.0 | 180.0 |
| Percentage of "Waste" | 85% | 83% | 67% | 50% | 33% |

As can be seen from Table 1, on average nearly 20% of users that start watching a given video clip will abandon it within the first 10 seconds. Within first 120 seconds, 58% of users will have abandoned that video. In addition, the number of seconds of media downloaded is at times 85% higher than the actual viewing time of the user. This means that as much as 85% of the download is never actually viewed, and is considered to be wasted data.

Table 2 is another illustration of the nature of these abandonments:

**Table 2: Just-in-Time Video Analysis for Longform Videos**

| | | | | | |
|---|---|---|---|---|---|
| Average total duration of video clip (sec) | 1800 | 1800 | 1800 | 1800 | 1800 |
| Abandonment probability | 20% | 30% | 45% | 50% | 58% |
| Typical abandonment time (sec) | 10 | 30 | 60 | 90 | 120 |
| media/video bit rate assumed (Kbps) | 300 | 300 | 300 | 300 | 300 |
| user throughput assumed (Kbps) | 2000 | 2000 | 2000 | 2000 | 2000 |
| Number of Seconds of Media Downloaded | 66.7 | 200.0 | 400.0 | 600.0 | 800.0 |
| Percentage of "Waste" | 85% | 85% | 85% | 85% | 85% |

Similar to the results shown in Table 1, Table 2 illustrates that the number of seconds of media downloaded is at times 85% higher than the actual viewing time of the user. This means that as much as 85% of the download is never actually viewed, and is considered wasteful.

In another prominent example, a subscriber may be downloading a video at a first codec rate, when the user equipment or application determines that using a different codec rate would be more appropriate. The user equipment or application then proceeds to abandon the download with the first codec rate, and instead initiates a new download using a new codec rate. This can be particularly problematic when the first codec rate is either an uncompressed or a hybrid rate, which acts to clog the downlink buffer because of its low throughput condition. Currently, it is very difficult for the user equipment to deal with this virtual bottleneck; the user equipment would still need to wait for the current section of the pending data using the first codec rate to be transmitted before it can transmit other data.

This abandoned data in the downlink buffer can waste radio frequency (RF) capacity, which can be especially harmful where radio resources are scarce. In addition, the abandoned data can decrease the battery life of the user equipment, and can also cause general latency and delays in the communication system, e.g. where the service is particularly delay sensitive.

EP2804441A1 describes a method of purging a context associated with a context identifier.

EP1881711A2 describes a method of managing packet data units (PDUs) received by a Node B from a radio network controller (RNC) and stored in a buffer of the Node B while awaiting transmission to a user equipment (UE).

### SUMMARY:

The invention relates to methods and apparatuses as set forth in the claims.

### BRIEF DESCRIPTION OF THE DRAWINGS:

For proper understanding of the invention, reference should be made to the accompanying drawings, wherein:
Figure 1 illustrates a signal flow diagram according to certain embodiments.
Figure 2 illustrates a signal flow diagram according to certain embodiments.
Figure 3 illustrates a signal flow diagram according to certain embodiments.
Figure 4 illustrates a system according to certain embodiments.

### DETAILED DESCRIPTION:

Certain embodiments may allow a user equipment (UE) to request that one or more access nodes, such as one or more eNodeB (eNB), purge the downlink buffer of abandoned data that acts to clog downlink transmissions. Such purging may be used to avoid large amounts of unnecessary over the air traffic, while simultaneously increasing both the usable communication system capacity and power, for example, over the air, backhaul, sidehaul, and/or in the core network or cloud. On the UE end, purging may improve the battery life of the UE.

In certain other embodiments, a device-to-device (D2D) communication may be employed in which a UE may request from an access node, for example a second UE, to purge at least one of an uplink buffer or a downlink buffer. In certain embodiments, the second UE can then communicate the request to purge with an eNB. The downlink and uplink buffers exist in at least one of the second UE and the eNB.

The UE, in certain embodiments, may provide proprietary network assistance to the access node through use of radio level signaling, such as a medium access control control element (MAC CE) or radio resource control (RRC) messaging. This messaging can be either pre-standard with a handset vendor outside of the standards bodies, or standardized, for example within the third generation partnership project (3GPP) radio layer 2 (RAN2). The messaging may also be compatible with all current and future Long Term Evolution (LTE) standards. In some embodiments, the UE can leverage radio level messaging to communicate this application centric request up to the communication network, in the context of the current application and user context. In other words, different layers of the communication protocols may be mixed.

By sharing knowledge and preferences between the UE and an access node, or any other network node, inefficiencies within the communication system can be avoided. For example, an access node inactivity and connected state discontinuous reception (C-DRX) decisions can utilize the knowledge of the UE traffic preferences. On the other side of the connection, the UE can use the access node's knowledge of network congestion as part of its decision making process. This sharing between the UE and the access node can improve the battery life and capacity of the UE, help the communication system avoid excess UE connections or modem-on-time, and excess RRC transitions. In addition, there are various other benefits derived from this virtual joint decision-making process by the UE and the access node.

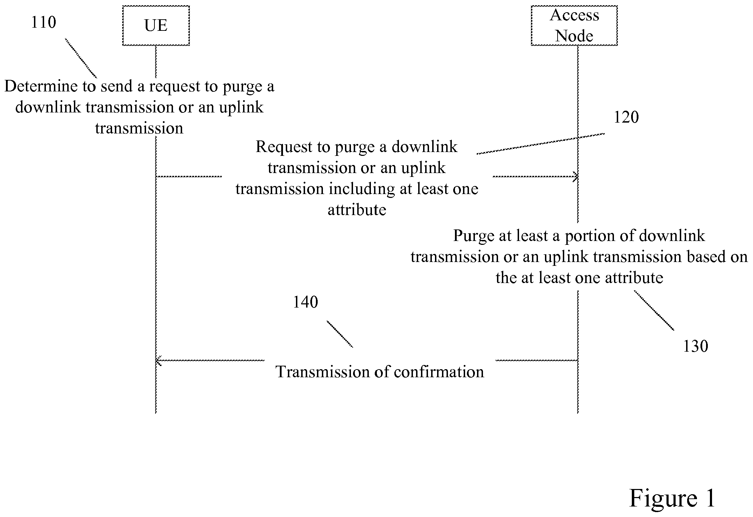

Figure 1 illustrates a flow diagram according to certain embodiments. First, the UE determines whether a predefined triggering criteria has been met in step 110. In other embodiments, the triggering criteria is not predefined, but rather determined by the UE based on a variety of possible network conditions. The UE then transmits a requesting message to an access node, for example eNB, in step 120. In other embodiments, the UE can transmit the requesting message to any other network node. Once the requesting message is received by the access node, the request may be further communicated by the access node to other network entities within the network.

The request sent from the UE to the access node is a purge request (PR), for example, as opposed to a scheduling request. In some embodiments the request is transmitted as a MAC CE, while in other embodiments the request is transmitted via RRC messaging. The request may include at least one attribute defined by the UE, which may be either predefined or set by the UE.

In certain embodiments, the UE may additionally transmit a message to an application server. The message may indicate that a current download or upload should be stopped, and/or that a purge request has been made. The application server may then convey to the UE information related to either the total amount or the final portion, of the media transmitted by the server. The UE may then use this information received from the application server to generate a corrected purge request to indicate the total amount of media which needs to be purged.

This UE messaging to the application server, and the subsequent application server response, may occur prior to the UE determining to send a request to purge to the access node. In this way the UE initial purge request can utilize the response from the application server. In other embodiments, however, the UE messaging to the application server may occur after or simultaneously to the UE determining to send a request to purge.

In a case where the UE messaging with the application server occurs after or simultaneous to the UE determining to send a request to purge to the access node, the information provided by the application server may then be used in a second UE initiated purge exchange with the access node. For example, after a first request to purge 120 is sent to the access node, a UE may send a second request to purge, thereafter, including the information received from the application server. This second request to purge can refine the at least one attribute provided in the initial request, enabling the access node to better determine when to stop the purge operation.

In step 120, a request to purge is sent from the UE to an access node. In some embodiments the access node may be an eNB. In other embodiments, however, the access node may be another UE, which may then forward the request to an eNB. Once the message is received by the access node, the access node can then make a decision based on the requesting message about whether to purge the data or not. In this embodiment, therefore, the UE requesting message may be a suggestion to the access node, not a command. The access node can choose whether or not it wants to abide by the request of the UE and then proceed to purge. In other embodiments, however, the decision on whether to purge cannot be made by the access node, but is rather directly controlled by the UE. In such an embodiment, upon receiving the message the access node must purge the downlink buffer according to the at least one attributes provided by the UE. In some embodiments, the UE may send an additional message canceling an earlier purge request.

In certain embodiments, after receiving a purge request from a UE, the access node would proceed to monitor, on behalf of the UE, the at least one attribute. For example, the UE request may include a network attribute having a specific threshold. The access node can be given the responsibility of monitoring the specified network attribute. Once the access node detects that this threshold has been reached, the access node may then proceed to purge the downlink buffer or the uplink buffer of the requesting UE. In some embodiments, in which the access node may be in a better position to monitor the specified attribute, the access node may monitor the attribute on its own. In embodiments where the UE may be in a better position to monitor a given attribute, however, the UE may either monitor the attribute, or share the monitoring responsibilities with the access node.

By purging at least a portion of the downlink transmission or the uplink transmission in step 130, the access node is deleting at least one portion of currently pending data bytes in the downlink transmission or the uplink transmission. By doing so, the access node purges data bytes which were meant for delivery to the UE, or from the UE, thus decreasing the amount of pending data bytes in the downlink or the uplink buffer. The UE, in certain embodiments, may request that the access node either continuously or repeatedly delete a specific fraction of the bytes which are pending. For example, the access node may repeatedly delete eight out of every nine packets pending for the UE, such that the UE will receive the ninth packet, the eighteenth packet, the twenty fourth packet, etc.. Receiving this limited subset of the packets can allow the UE to determine if the delivered packets in the downlink traffic are of interest to the UE. The UE may then evaluate each of the subset packets, for example evaluate the return IP address of each packet, and determine whether these packets are associated with a particular service which is not currently desired.

In another embodiment, the request from the UE may include a field indicating the volume of user traffic to be purged. For example, the field may indicate the volume of user traffic to be purged in units of octets. In some embodiments, the request may signal the access node to purge all current pending data in the downlink buffer or the uplink buffer.

In some embodiments, the UE may indicate in the request, in step 120, which portions of the downlink traffic or the uplink traffic should be purged. For example, download traffic or uplink traffic on a particular quality of service class identifiers (QCI), traffic arriving within a specific time range, or traffic having a similar return IP address as the current pending IP address. Other examples include download traffic or uplink traffic with packet sizes within a particular range, or adhering to a particular traffic flow template (TFT).

The UE may also indicate which portions of the downlink transmission or uplink transmission it would like purged based on the at least one attribute it includes in the requesting message. For example, the at least one attribute can indicate to the access node to purge all data bytes that are currently pending in the downlink buffer or the uplink transmission for that UE. The access node may then consider this attribute and purge all current pending data bytes in the downlink buffer. In another example, the at least one attribute can be a logical channel, logical channel identifiers (LCID), logical channel group, QCI, access point name (APN), flow, return Internet Protocol (IP) address, or TFT.

In yet another example, the at least one attribute may be data bytes which have arrived, or will arrive, within a specific time interval. In some embodiments, a given time intervals can go back in time, and include data bytes already pending in the downlink buffer or uplink buffer. In other embodiments, the at least one attribute can be a specified time interval that will only apply to new data that will be received by the downlink buffer or uplink buffer during that time interval. For example, the specific time interval can be the next five minutes. During the next five minutes, the access node will purge all data bytes received in the downlink or uplink transmission buffer. In another embodiment, the UE may request that the bytes be purged while it is in a particular location. For example, a UE in a low security location, passing through a tunnel, or while the application is temporarily in the background/deemphasized in the user display.

In some embodiments, the at least one attribute can also indicate additional data bytes which appear to be similar to, or a part of, the same flow as the data bytes containing the at least one attribute. In such an embodiment, the access node may purge all current pending data bytes in the buffer which not only explicitly meet the at least one attribute, but also appears similar to, or a part of, the same flow as those bytes containing the at least one attribute. For example, the network may utilize deep packet inspection (DPI) technology to identify other packets which appear to be part of the same flow. In other examples, packets with the same return IP address or protocol type may be classified as sufficiently similar. Alternatively, the access node may purge data bytes which will be received in the future, but which the access node identifies as being similar to, or a part of, data explicitly containing the at least one attribute.

The UE, therefore, can indicate to the network that those packets having a similar attribute to those recently purged, are likely to be a continuation of the previously purged and unwanted download or upload. The at least one attribute in this embodiment may include packet size, return IP address, packet type, APN, logical channel, or testing. Any other attributes which can be used to identify similarities between two data bytes may also be used. This embodiment may be particularly useful in the case where all packets are within one best effort flow, or within a single logical channel.

In yet another embodiment, the UE may include an attribute indicating that a specific set of guaranteed bit rate (GBR) packets be purged. Alternatively, the UE may include an attribute indicating that current pending data in the downlink buffer or the uplink buffer may be purged in order to clear path for a set of GBR packets to be transmitted. Based on the request from the UE, the access node may then choose whether or not to proceed with the purging of the data.

In step 140, the access node can then cause the transmission of a confirmation to the UE indicating at least one portion of the downlink transmission which has been purged. In this confirmation, the access node may indicate the amount of data purged or the number of bytes purged from the downlink buffer. In some other embodiments, the eNB may then cause the transmission of a confirmation which indicates to the UE that the access node did not abide by its request, and did not purge any data. The downlink channel between the UE and the access node may be maintained even after the purging. In some embodiments, because the downlink buffer has been purged, the UE can proceed with receiving other data more rapidly. In other embodiments, the uplink channel between the UE and the access node may be maintained even after the purging. The UE can then proceed to send data more rapidly, because the uplink buffer has been purged.

In some embodiments involving D2D communication, the access node may be another user equipment. For example, where a first UE may be out of coverage, but is within wireless range of a second UE that is within wireless coverage of the eNB, the first UE may send the purging request to the second UE. In this example, a first UE can wirelessly communicate directly with a second UE, and the second UE may wirelessly communicate with the eNB. Therefore, the first UE may transmit a purge request to purge at least one of an uplink buffer or a downlink buffer to the second UE. This purge request may then be forwarded from the second UE to the eNB.

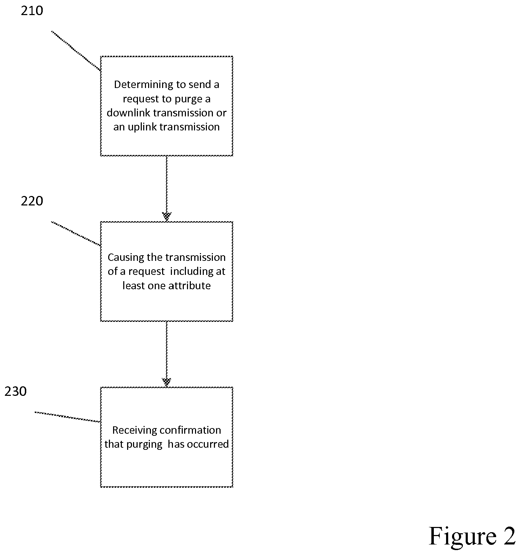

Figure 2 illustrates a system flow diagram according to certain embodiments. In step 210, an apparatus, for example a UE, determines whether to send a request asking an access node to purge downlink uplink transmission data. Once a determination is made, the UE then causes the transmission of a request, in step 220, to an access node including at least one attribute of the downlink or uplink transmission data. Once the access node purges the data bytes in the downlink or uplink transmission according to the at least one attribute, in step 230 the UE receives a confirmation that purging has occurred.

In certain embodiments, the determination of whether or not to send a request to a network entity to purge a downlink or uplink transmission is triggered if the UE determines that a predetermined network attribute or performance value has been met. In certain other embodiments, the UE causes the transmission of the request if the network observes the network congestion exceeds some predefined threshold, such as 80% utilization with over 500 subscribers active in that cell.

Alternatively, the UE may utilize downlink messaging which indicates to the UE a network congestion estimate, such that the UE can use this estimate to determine whether to send a purge request to the network.

In some embodiments, the UE can indicate to an access node that data in the downlink buffer should be deleted only if the throughput being experienced by another UE, such as a UE vendor, is less than a predefined threshold. Yet in other embodiments, the evaluation of the network congestion can be limited to evaluating the downlink transmission or uplink transmission buffer of the determining UE. The network may also monitor the network congestion and per user throughput. If a predetermined network congestion event is reached, the UE's downlink buffer can be purged, and the UE can notified of the purge event.

In certain embodiments, the UE may send a purge request to the access node if the UE anticipates throughput to drop below a predefined, specific threshold. In response to the UE's request, the access node can then choose whether or not to purge the data bytes. In some other embodiments, however, the UE may request that the access node automatically delete data in the downlink transmission or uplink transmission in the event that the throughput drops below some specific predetermined threshold. Alternatively, the threshold may not be predetermined, and the access node may at least partially make a decision about the anticipated throughput based on the current monitored network congestion. In such an embodiment, the UE and the access node may share in making a decision about whether to purge.

In some embodiments, if the current or anticipated link speed is less than or equal to 1 megabit per second, then a UE request to purge data will be triggered. In one example, if the media currently being downloaded to or uploaded from the UE has a bit rate of 1 megabit per second, the requesting message will trigger. Upon receiving the request, the access node may purge the requested data, and cause the transmission of a confirmation to the UE. Upon receiving the confirmation, the UE may then generate a new download or upload with a more compressed version of the same media which was recently purged from the downlink or uplink transmission.

The UE, in another embodiment, may request that the access node delete data purge data from the downlink transmission or uplink transmission if a higher priority QCI arrives. Alternatively, the UE may request that the access node delete data if the UE QCI or signal strength drops below a threshold, or if a GBR or an emergency call is initiated. The access node can then determine whether or not to abide by the request. The access node, in other embodiments, can automatically delete data from the downlink transmission upon receiving the request from the UE.

In one embodiment, in which the UE reports uplink data on a higher priority logical channel group (LCG), for example over a buffer status report (BSR), this may automatically cause the access node to purge some lower priority downlink traffic that is pending for a lower priority LCG. In this case, the BSR reporting of traffic on the uplink on this higher priority LCG, is taken as an indicator that data on that higher priority LCG will likely also soon be placed on the downlink.

The UE may request, in certain embodiments, that a purge be performed upon being handed off into a congested cell. For example, if the UE was in the middle of a download of a relatively high bit rate or uncompressed file, and after handoff the UE finds itself in a congested cell, the UE may request that the access node purge current pending downlink or uplink data. Once the data is purged, the UE can initiate a new request for a more compressed version of the required media. In one example, a congested cell is a cell where the average per user throughput is less than 1 megabit per second. In another embodiment a congested cell may be one where the network utilization is greater than 80%, and the number of active subscribers is greater than a threshold, for example 100 subscribers for a given system bandwidth.

In other embodiments, the UE may request that the access node perform a purge upon determining that the file currently being downloaded is spam or a virus. Some examples of spam can include an advertisement or some type of media which was either misrepresented, or simply not of interest to the UE. In some embodiments, the UE may conduct an automated analysis of the type of media by itself. This performed analysis within the UE can help the UE determine whether or not the media should be classified as spam or a virus. In other embodiments, another network entity may tag certain media as spam or a virus, according to various predetermined criteria. The UE can then detect the tags and initiate the purging request.

In yet some other embodiments, the automatic classification of spam may be the result of media analysis performed by security functionality within the UE. This may help the UE to protect itself from downloading a particular virus, by allowing the UE to detect a specific virus signature at the beginning of the download. The UE may then request the access node to purge the download, thereby preventing the harm caused by the malware. Such purging can also help prevent the UE from draining battery life while downloading the unwanted media, as well as wasting the users monthly allotted data limit.

The UE may also initiate the purge request when the UE is critically low on battery. In one example, the UE may want to conserve its remaining battery, and sends a request to the access node to purge all current downlink transmissions in order to conserve battery life. In another example, the UE may become aware that it does not have enough battery to be able to meet the subscribers' needs, for example in response to the UE being unplugged from a power source. A UE can calculate the amount of battery life required for various activities, such as a download or upload, or the amount of battery needed to make it to the end of the day given a profile of user activity. For example, the UE can estimate the duration of the download or upload based upon the prevailing download or upload link speed, and can then combine this with the instantaneous current drain during the download or upload at that link speed.

In another example, if the UE is very low on battery life, for example only 5% left, and the subscriber unplugs the phone from a fixed power supply, it may be appropriate to immediately cease background data transfers. In such an example, the UE will request that the downloading or uploading data be purged in order to conserve radio resources on the network end from being wasted. In this example, where the dominant attribute is the battery life of the UE, the access node will automatically abide by the UE's request and purge the downlink transmission or uplink transmission.

In other embodiments, the UE may initiate a request to purge when the UE was previously performing a background transfer, but has now initiated a high priority foreground service. In this embodiment, purging the background traffic from the downlink buffer will allow the UE to more rapidly initiate the higher priority service. In one example, both the background and the foreground services are best effort services, such that the second service which has a higher priority, from the UE or application perspective, would not have otherwise been prioritized in front of the already pending background traffic. Regardless, the UE can generate the purge request just prior to generating the request for the higher priority service, such that the downlink buffer or uplink buffer is purged either just in time or prior to the arrival of the new higher priority media.

After determining whether to initiate a request to the access node to purge downlink or uplink transmission data, the UE can send a request, in step 220, to an access node. The sent message requesting this purge may be performed over the uplink MAC CE with a currently reserved index. Alternatively, the message requesting the purge may be sent via a RRC. The request may also be part of a proprietary protocol supported by a subset of the UEs and network nodes. The protocol can become active upon a UE's discovery that the proprietary protocol is supported at the access node.

In certain embodiments, the RRC messaging may be advantageously used to create or request a longer-term purge policy within the network. For example, the policy may be that the UE can indicate for the duration of that RRC connection, specific user data bytes that should be purged in the event that specific indicated network conditions are reached. This policy may persist for the rest of the RRC connection, unless an RRC configuration is initiated.

In other embodiments, MAC messaging may be advantageously used to deliver more real time purge request messaging from the UE to the network. For example, the UE may utilize uplink MAC CE messaging to rapidly request the eNB to perform a specific downlink access node purge at that time.

In some embodiments, the request from the UE may include a field indicating the volume of user traffic to be purged. For example, the field may indicate the volume of user traffic to be purged in units of octets. The message may also include a field indicating the LCID or LCG associated with the user traffic to be purged. In other embodiments, the message may include a field indicating the time interval over which the access node should continue to purge traffic. For example, the request may specify that the access node can purge a maximum volume of octets. Once the access node has reached that maximum limit, the access node can stop purging data bytes from the downlink transmission. In addition, the request may include a field which further indicates the conditions upon which the octets will be purged. For example, the field may specify that the octets will be purge in the event of a significant increase in network congestion.

In yet another embodiment, the request may include a field which indicates that the traffic should be tentatively purged for a specified time interval. During this specified time interval, the UE may have an opportunity to undelete or cancel the permanent purging of data. Tentative purging, therefore, can have the effect of delaying the delivery of currently pending traffic to the UE. During this time period, the UE can request that the delivery resume, and the tentatively purged information can be restored and sent to the UE. If the UE, however, does not make such a request, then the data may be permanently purged after a specified period of time.

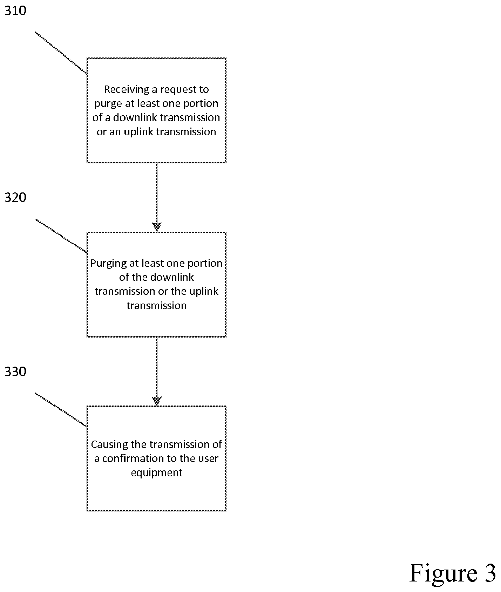

Figure 3 illustrates a system flow diagram according to certain embodiments. In step 310, the access node, such as an eNB, can receive a request for purging downlink transmission. Upon receiving the request, the access node can then decide whether or not to purge the data in the downlink buffer. In step 320, the access node can purge data from the downlink transmission. In other embodiments, the access node can automatically purge the data based on the received request, without making an independent determination. In those embodiments, the UE is directly controlling the decision to purge the downlink buffer. In other embodiments, the UE may at least partially control the decision to purge. Upon purging the data, the access node can then cause the transmission of a confirmation, in step 330, to the UE that purging has occurred. This confirmation can indicate the status of the purge and how many data bytes were purged. For example, the access node may indicate how many octets were or were not purged.

In other embodiments, the confirmation message in step 330 may utilize broadcast functionality similar to a new system information block. The message may indicate that specific traffic that has been previously tagged by the UE was purged because of an emergency or an Earthquake and Tsunami warning system (ETWS) event. The data previously tagged data may be, for example, low priority data. Alternatively, the data is tagged by a network entity other than the UE. For example, a network entity may tag data as being part of a flow or as having a lower priority attribute.

In some other embodiments, a separate notification which utilizes broadcast functionality can be sent to the UE. This separate notification will not be part of the confirmation message, but rather an independent message that can indicate that specific traffic has been purged. Therefore, the access node can make a decision to purge, without having been previously tagged by the UE, because of an emergency or an ETWS event. The access node will then inform the UE of the purged in a separate notification, which can allow the UE to learn of the type of data which had been purged from the downlink.

Alternatively, a broadcast message from the access node may indicate a specific category of data, which may trigger the UE to determine whether to send a request to purge any downlink traffic falling within this specific category of data.

In certain embodiments, upon sending the purging request, the UE can immediately transition to a UE idle mode. In some embodiments, the user attempting to transition the UE to an idle mode or a screen locked mode may trigger the sending of the UE purging request message to the access node. For example, when a user turns off a UE's screen, the UE can request that a current download be halted, possibly eliminating the need for the RRC connected mode. In some embodiments, the downlink transmission may be a unicast transmission.

In one example, the user may be reading news or watching a video, and decide to lock the screen on his phone and put it away. The phone may then send a request to the access node in order to stop the transmission of the next section of the video or news article. Once the access node receives the request, it can purge the current data in the downlink buffer, and possibly some additional other downlink data bytes according to the at least one attribute. The at least one attribute can approximate, and allow the access node to purge, the number of data bytes remaining in the download of the most recently requested or partially downloaded section of the video. The UE can then enter idle mode, and avoid any additional unwanted traffic.

The UE, in certain embodiments, may initiate the purging, such that the UE would take responsibility for the impact of the purged downlink transmission. Because the UE has access to information in the application level, it may determine when, where, and if this purge request may be helpful. This is similar to how a handset can make a variety of decisions that the handset may deem benefit its own performance. For example, a UE may choose to download many bytes prior to those bytes being needed or even requested by the user. While this could potentially result in a poor user experience, because the battery life of the UE may be drained, the UE can ultimately be held responsible for ensuring that the user experience does not suffer.

In other embodiments, however, the network may oversee the UE's decision making, and can have the option of rejecting the UE's request. For example, if a UE requests that an access node purge all current data in the downlink transmission, the access node may reject the request and continue transmitting. The access node can also make this decision based on information it receives from another entity other than the UE.

Further, in certain embodiments, the above process may be used along with a Dual Connectivity feature having split bearers. In Dual Connectivity, a given UE can consume radio resources provided by at least two different access nodes (or at least two different cells) and logical channels. The access nodes can be split into two different nodes, a master access node, for example a Master eNB (MeNB), and a secondary access node, for example a Secondary eNB (SeNB). In some embodiments, there is only one S1 interface mobility management entity (MME) connection per UE that can be terminated at the MeNB. The MeNB, therefore, can act as the mobility anchor towards the core network, while the SeNB provides additional radio resources for the UE.

In some embodiments, the UE causes the transmission of a request to purge the MeNB. The MeNB may be in charge of handling the packet data convergence protocol sublayer (PDCP) distributing the traffic, in which case the MeNB can also send the purging request to the SeNB, for example, through the X2 interface. The SeNB can then perform a purge of the at least one portion of the downlink transmission or the uplink transmission. This embodiment can limit the amount of air interface used in transmitting the purging request. It can also allow the MeNB to take into account information regarding UE connections and dual connectivity when determining how to proceed upon the receipt of a purging request.

In other embodiments, the UE may cause a transmission of the request for purging the at least one portion of the downlink transmission or the uplink transmission, based on the at least one attribute, from the user equipment to both the MeNB and the SeNB. Each of the access nodes may autonomously determine how to proceed upon the receipt of a purging request. This embodiment provide for a simplified purging request process in a dual connectivity environment. In addition, the X2 interface between the MeNB and the SeNB can be used to report a sequence number range which has been purged at the SeNB or the MeNB. This may help lessen any negative effects on PDCP and transmission control protocol (TCP) operations which may experience sequence number holes. In addition, the MeNB and/or the SeNB can send a confirmation to the UE reporting and acknowledging the purging.

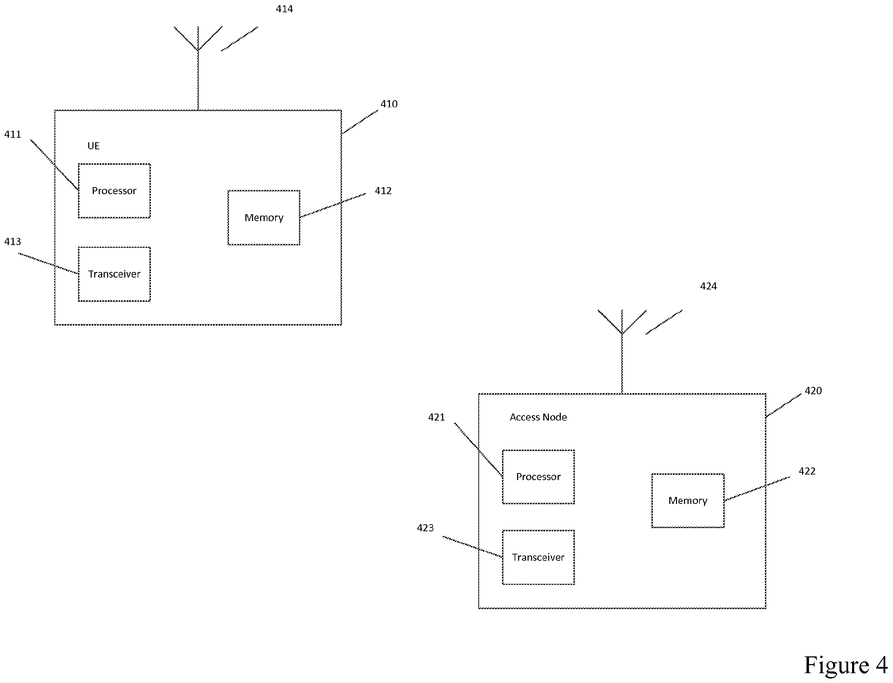

Figure 4 illustrates a system according to certain embodiments. It should be understood that each block of the flowchart of Figures 1, 2, or 3, and any combination thereof, may be implemented by various means or their combinations, such as hardware, software, firmware, one or more processors and/or circuitry. In one embodiment, a system may include several devices, such as, for example, access node 420 and UE or user device 410. The system may include more than one UE 410 and more than one access node 420, although only one of each is shown for the purposes of illustration. An access node can be any network node, for example a base station, an eNB, server, host or any of the other access node discussed herein. In certain embodiments, an access node may be a user equipment. Each of these devices may include at least one processor or control unit or module, respectively indicated as 421 and 411. At least one memory may be provided in each device, and indicated as 422 and 412, respectively. The memory may include computer program instructions or computer code contained therein. One or more transceiver 423 and 413 may be provided, and each device may also include an antenna, respectively illustrated as 424 and 414. Although only one antenna each is shown, many antennas and multiple antenna elements may be provided to each of the devices. Other configurations of these devices, for example, may be provided. For example, access node 420 and UE 410 may be additionally configured for wired communication, in addition to wireless communication, and in such a case antennas 424 and 414 may illustrate any form of communication hardware, without being limited to merely an antenna.

Transceivers 423 and 413 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make an access node deliver local content. One or more functionalities may also be implemented as virtual application(s) in software that can run on a server.

A user device or user equipment 410 may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof.

In some embodiment, an apparatus, such as a node or user device, may include means for carrying out embodiments described above in relation to Figures 1, 2, or 3. In certain embodiments, at least one memory including computer program code can be configured to, with the at least one processor, cause the apparatus at least to perform any of the processes described herein.

In certain embodiments, the at least one memory and a computer program code are configured to, with the at least one processor, cause the apparatus to receive at a access node a request for purging, from a user equipment, at least one portion of a downlink transmission or an uplink transmission, wherein the request includes at least one attribute of the at least one portion of the downlink transmission or the uplink transmission, perform at the access node a purge of the at least one portion of the downlink transmission or the uplink transmission based on the at least one attribute.

In certain other embodiments, the at least one memory and a computer program code are configured to, with the at least one processor, cause the apparatus to determine by a user equipment to send a request to purge at least one portion of a downlink transmission or an uplink transmission, wherein the request comprises at least one attribute of the at least one portion of the downlink transmission or the uplink transmission, and cause a transmission of the request for purging the at least one portion of the downlink transmission or the uplink transmission, based on the at least one attribute, from the user equipment to an access node.

In some embodiments, an apparatus may include means for receiving at an access node a request for purging, from a user equipment, at least one portion of a downlink transmission or an uplink transmission, where the request comprises at least one attribute of the at least one portion of the downlink transmission or the uplink transmission. The apparatus may also include means for purging at the access node the at least one portion of the downlink transmission or the uplink transmission based on the at least one attribute.

In other embodiments, an apparatus may include means for determining by a user equipment to send a request to purge at least one portion of a downlink transmission or an uplink transmission, where the request comprises at least one attribute of the at least one portion of the downlink transmission or the uplink transmission. The apparatus may also include means for causing a transmission of the request for purging the at least one portion of the downlink transmission or the uplink transmission, based on the at least one attribute, from the user equipment to an access node.

Processors 411 and 421 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 412 and 422 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as access node 420 and/or UE 410, to perform any of the processes described above (see, for example, Figures 1, 2, and 3). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Furthermore, although Figure 4 illustrates a system including a access node 420 and a UE 410, certain embodiments may be applicable to other configurations, and configurations involving additional elements, as illustrated and discussed herein. For example, multiple user equipment devices and multiple access nodes may be present, or other nodes providing similar functionality, such as nodes that combine the functionality of a user equipment and an access point, such as a relay node. The UE 410 may likewise be provided with a variety of configurations for communication other than communication access node 420. For example, the UE 410 may be configured for device-to-device communication.

In addition, a system may relate to wireless or mobile communication networks, such as, but not limited to relate to wireless or mobile communications networks, such as, but not limited to, the Universal Mobile Telecommunications System (UMTS) Terrestrial Radio Access Network (UTRAN), 3GPP LTE (e.g., LTE Rel-10, LTE Rel-11, LTE Rel-12, LTE Rel-13), Evolved UTRAN (E-UTRAN), LTE-Advanced (LTE-A), future 5G radio access technology, and/or Wireless Local Area Network (WLAN).

The embodiments described above help improve a communication system. The embodiments allow for a proprietary knowledge sharing protocol between a UE and an access node, such as an eNB, that can rid the communication system of a large amount of abandoned downlink data transmissions. Some of the benefits produced by this joint decision making include decreasing the amount of resources a network has to dedicate to downlink transmissions, extending the battery of life of a UE, and improving quality of experience.

The above embodiments can be utilized with RRC or MAC messaging. The embodiments may also be incorporated into other pre-standard protocols or standard protocols, including 3GPP RAN2.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention.

## Claims

1. A method, comprising:
receiving (120), at an access node from a user equipment, a request for purging data in at least one portion of a downlink transmission or an uplink transmission when at least one of: the network congestion exceeds a predefined value, or a per user throughput drops below a predetermined threshold value, wherein the request comprises at least one attribute of the at least one portion of the downlink transmission or the uplink transmission; and
performing (130), at the access node, a purge of data in the at least one portion of the downlink transmission or the uplink transmission based on the at least one attribute.

2. The method according to claim 1, further comprising:
forwarding the request for purging to another access node, wherein the another access node performs a purge of the at least one portion of the downlink transmission or the uplink transmission.

3. The method according to claim 1 or 2, further comprising:
causing a transmission of a confirmation to the user equipment that the purging has occurred.

4. The method according to claim 1, wherein a downlink channel or an uplink channel between the access node and the user equipment is maintained after performing of the purging at the access node.

5. A method, comprising:
determining (110) by a user equipment to send a request to purge data in at least one portion of a downlink transmission or an uplink transmission when at least one of: the network congestion exceeds a predefined value, or a per user throughput drops below a predetermined threshold value, wherein the request comprises at least one attribute of the at least one portion of the downlink transmission or the uplink transmission; and
causing (120) a transmission of the request for purging data in the at least one portion of the downlink transmission or the uplink transmission, based on the at least one attribute, from the user equipment to at least one access node.

6. The method according to claim 1 or 5, wherein the access node comprises a base station or another user equipment.

7. The method according to claim 5 or 6, further comprising:
receiving a confirmation at the user equipment that the purging has occurred.

8. The method according to claim 3 or 7, wherein the confirmation comprises at least one of the amount of data purged or a request that the user equipment transition to idle.

9. The method according to claim 1 or 5, wherein the at least one attribute includes at least one of data currently pending in the downlink transmission or the uplink transmission, quality of service class identifiers, data arriving within a predetermined time period, additional data which is part of data currently pending, and additional data which is part of recently transmitted data, or at least one parameter identifying a flow.

10. The method according to claim 9, wherein the at least one parameter identifying the flow is a logical channel identifier.

11. The method according to claim 5, wherein the request is sent when at least one of network congestion exceeds a predefined value, the user equipment anticipates throughput to drop below a predetermined threshold value, a higher priority quality of service class identifier is identified, a quality of service class identifier or signal strength drops below a threshold, a guaranteed bit rate call is initiated, a handover of the user equipment into a congested cell occurs, a user equipment determines that a data in the downlink transmission is classified as spam, a battery level of the user equipment falls below a predetermined threshold, or the user equipment is initiating a high priority foreground service.

12. The method according to claim 1 or 5, wherein the request comprises a medium access control control element or a radio resource control message.

13. An apparatus, comprising:
means for receiving (120) at an access node from a user equipment, a request for purging data in at least one portion of a downlink transmission or an uplink transmission,
when at least one of: the network congestion exceeds a predefined value, or a per user throughput drops below a predetermined threshold value,
wherein the request comprises at least one attribute of the at least one portion of the downlink transmission or the uplink transmission; and
means for purging (130), at the access node, data in the at least one portion of the downlink transmission or the uplink transmission based on the at least one attribute.

14. An apparatus, comprising:
means for determining (110) by a user equipment to send a request to purge data in at least one portion of a downlink transmission or an uplink transmission when at least one of: the network congestion exceeds a predefined value, or a per user throughput drops below a predetermined threshold value, where the request comprises at least one attribute of the at least one portion of the downlink transmission or the uplink transmission; and
means for causing (120) the transmission of the request for purging data in the at least one portion of the downlink transmission or the uplink transmission, based on the at least one attribute, from the user equipment to an access node.

## Patentansprüche

1. Verfahren, das Folgendes umfasst:
Empfangen (120), an einem Zugangsknoten, einer Anforderung von einem Benutzergerät zum Bereinigen von Daten in wenigstens einem Teil einer Downlink-Übertragung oder einer Uplink-Übertragung, wenn: die Netzüberlastung einen vorbestimmten Wert überschreitet und/oder ein Durchsatz pro Benutzer auf unterhalb eines vorbestimmten Schwellenwertes abfällt, wobei die Anforderung wenigstens ein Attribut des wenigstens einen Teils der Downlink-Übertragung oder der Uplink-Übertragung umfasst; und
Durchführen (130), bei dem Zugangsknoten, einer Bereinigung von Daten in dem wenigstens einen Teil der Downlink-Übertragung oder der Uplink-Übertragung basierend auf dem wenigstens einen Attribut.

2. Verfahren nach Anspruch 1, das ferner Folgendes umfasst:
Weiterleiten der Anforderung zum Bereinigen an einen anderen Zugangsknoten, wobei der andere Zugangsknoten eine Bereinigung des wenigstens einen Teils der Downlink-Übertragung oder der Uplink-Übertragung durchführt.

3. Verfahren nach Anspruch 1 oder 2, das ferner Folgendes umfasst:
Bewirken einer Übertragung einer Bestätigung an das Benutzergerät, dass das Bereinigen stattgefunden hat.

4. Verfahren nach Anspruch 1, wobei ein Downlink-Kanal oder ein Uplink-Kanal zwischen dem Zugangsknoten und dem Benutzergerät nach dem Durchführen des Bereinigens bei dem Zugangsknoten beibehalten wird.

5. Verfahren, das Folgendes umfasst:
Bestimmen (110), durch ein Benutzergerät, eine Anforderung zum Bereinigen von Daten in wenigstens einem Teil einer Downlink-Übertragung oder einer Uplink-Übertragung zu senden, wenn: die Netzüberlastung einen vorbestimmten Wert überschreitet und/oder ein Durchsatz pro Benutzer auf unterhalb eines vorbestimmten Schwellenwertes abfällt, wobei die Anforderung wenigstens ein Attribut des wenigstens einen Teils der Downlink-Übertragung oder der Uplink-Übertragung umfasst; und
Bewirken (120) einer Übertragung der Anforderung zum Bereinigen von Daten in dem wenigstens einen Teil der Downlink-Übertragung oder der Uplink-Übertragung basierend auf dem wenigstens einen Attribut von dem Benutzergerät an wenigstens einen Zugangsknoten.

6. Verfahren nach Anspruch 1 oder 5, wobei der Zugangsknoten eine Basisstation oder ein anderes Benutzergerät umfasst.

7. Verfahren nach Anspruch 5 oder 6, das ferner Folgendes umfasst:
Empfangen einer Bestätigung an dem Benutzergerät, dass das Bereinigen stattgefunden hat.

8. Verfahren nach Anspruch 3 oder 7, wobei die Bestätigung die Menge an bereinigten Daten und/oder eine Anforderung, dass das Benutzergerät in einen Leerlauf übergeht, umfasst.

9. Verfahren nach Anspruch 1 oder 5, wobei das wenigstens eine Attribut Folgendes umfasst: Daten, die momentan in der Downlink-Übertragung oder der Uplink-Übertragung ausstehen, und/oder Dienstqualitätsklassenkennungen und/oder Daten, die innerhalb einer vorbestimmten Zeitperiode ankommen, und/oder zusätzliche Daten, die Teil von momentan ausstehenden Daten sind, und/oder zusätzliche Daten, die Teil von vor kurzem übertragenen Daten sind, und/oder wenigstens einen Parameter, der einen Fluss identifiziert.

10. Verfahren nach Anspruch 9, wobei der wenigstens eine Parameter, der den Fluss identifiziert, eine Logikkanalkennung ist.

11. Verfahren nach Anspruch 5, wobei die Anforderung gesendet wird, wenn: eine Netzwerküberlastung einen vordefinierten Wert überschreitet und/oder das Benutzergerät erwartet, dass ein Durchsatz auf unterhalb eines vorbestimmten Schwellenwertes abfällt, und/oder eine Dienstqualitätsklassenkennung mit höherer Priorität identifiziert wird und/oder eine Dienstqualitätsklassenkennung oder eine Signalstärke auf unterhalb einer Schwelle abfällt und/oder ein Anruf mit garantierter Bitrate initiiert wird und/oder ein Handover des Benutzergeräts in eine überlastete Zelle stattfindet und/oder ein Benutzergerät bestimmt, dass Daten in der Downlink-Übertragung als Spam klassifiziert sind, und/oder ein Batteriepegel des Benutzergerätes auf unterhalb einer vorbestimmten Schwelle abfällt und/oder das Benutzergerät einen Vordergrunddienst mit hoher Priorität initiiert.

12. Verfahren nach Anspruch 1 oder 5, wobei die Anforderung ein Medienzugangssteuerung-Steuerelement oder eine Funkressourcensteuernachricht umfasst.

13. Einrichtung, die Folgendes umfasst:
ein Mittel zum Empfangen (120), an einem Zugangsknoten, einer Anforderung von einem Benutzergerät zum Bereinigen von Daten in wenigstens einem Teil einer Downlink-Übertragung oder einer Uplink-Übertragung, wenn: die Netzüberlastung einen vorbestimmten Wert überschreitet und/oder ein Durchsatz pro Benutzer auf unterhalb eines vorbestimmten Schwellenwertes abfällt, wobei die Anforderung wenigstens ein Attribut des wenigstens einen Teils der Downlink-Übertragung oder der Uplink-Übertragung umfasst; und
ein Mittel zum Bereinigen (130), an dem Zugangsknoten, von Daten in dem wenigstens einen Teil der Downlink-Übertragung oder der Uplink-Übertragung basierend auf dem wenigstens einen Attribut.

14. Einrichtung, die Folgendes umfasst:
ein Mittel zum Bestimmen (110), durch ein Benutzergerät, eine Anforderung zum Bereinigen von Daten in wenigstens einem Teil einer Downlink-Übertragung oder einer Uplink-Übertragung zu senden, wenn: die Netzüberlastung einen vorbestimmten Wert überschreitet und/oder ein Durchsatz pro Benutzer auf unterhalb eines vorbestimmten Schwellenwertes abfällt, wobei die Anforderung wenigstens ein Attribut des wenigstens einen Teils der Downlink-Übertragung oder der Uplink-Übertragung umfasst; und
ein Mittel zum Bewirken (120) einer Übertragung der Anforderung zum Bereinigen von Daten in dem wenigstens einen Teil der Downlink-Übertragung oder der Uplink-Übertragung basierend auf dem wenigstens einen Attribut von dem Benutzergerät an wenigstens einen Zugangsknoten.

## Revendications

1. Procédé, comprenant :
la réception (120), au niveau d'un noeud d'accès, en provenance d'un équipement utilisateur, d'une requête de purge de données dans au moins une partie d'une transmission de liaison descendante ou d'une transmission de liaison montante quand au moins un élément s'applique parmi : la congestion du réseau dépasse une valeur prédéfinie, ou un débit par utilisateur chute au-dessous d'une valeur de seuil prédéterminée, la requête comprenant au moins un attribut de ladite au moins une partie de la transmission de liaison descendante ou de la transmission de liaison montante ; et
l'exécution (130), au niveau du noeud d'accès, d'une purge de données dans ladite au moins une partie de la transmission de liaison descendante ou de la transmission de liaison montante sur la base dudit au moins un attribut.

2. Procédé selon la revendication 1, comprenant en outre :
la retransmission de la requête de purge à un autre noeud d'accès, l'autre noeud d'accès effectuant une purge de ladite au moins une partie de la transmission de liaison descendante ou de la transmission de liaison montante.

3. Procédé selon la revendication 1 ou 2, comprenant en outre :
le déclenchement d'une transmission d'une confirmation à l'équipement utilisateur que la purge a eu lieu.

4. Procédé selon la revendication 1, dans lequel un canal de liaison descendante ou un canal de liaison montante entre le noeud d'accès et l'équipement utilisateur est maintenu après l'exécution de la purge au niveau du noeud d'accès.

5. Procédé, comprenant :
la détermination (110) par un équipement utilisateur d'envoyer une requête de purge de données dans au moins une partie d'une transmission de liaison descendante ou d'une transmission de liaison montante quand au moins un élément s'applique parmi : la congestion du réseau dépasse une valeur prédéfinie, ou un débit par utilisateur chute au-dessous d'une valeur de seuil prédéterminée, la requête comprenant au moins un attribut de ladite au moins une partie de la transmission de liaison descendante ou de la transmission de liaison montante ; et
le déclenchement (120) d'une transmission de la requête de purge de données dans ladite au moins une partie de la transmission de liaison descendante ou de la transmission de liaison montante, sur la base dudit au moins un attribut, de l'équipement utilisateur à au moins un noeud d'accès.

6. Procédé selon la revendication 1 ou 5, dans lequel le noeud d'accès comprend une station de base ou un autre équipement utilisateur.

7. Procédé selon la revendication 5 ou 6, comprenant en outre :
la réception d'une confirmation, au niveau de l'équipement utilisateur, que la purge a eu lieu.

8. Procédé selon la revendication 3 ou 7, dans lequel la confirmation comprend au moins l'une de la quantité de données purgées ou d'une requête que l'équipement utilisateur passe au mode veille.

9. Procédé selon la revendication 1 ou 5, dans lequel ledit au moins un attribut comprend au moins un élément parmi : des données actuellement en cours dans la transmission de liaison descendante ou la transmission de liaison montante, des identifiants de classe d'une qualité de service, des données arrivant dans une période de temps prédéterminée, des données supplémentaires qui font partie de données actuellement en cours, et des données supplémentaires qui font partie de données récemment transmises, ou au moins un paramètre identifiant un flux.

10. Procédé selon la revendication 9, dans lequel ledit au moins un paramètre identifiant le flux est un identifiant de canal logique.

11. Procédé selon la revendication 5, dans lequel la requête est envoyée quand au moins un élément s'applique parmi : la congestion du réseau dépasse une valeur prédéfinie, l'équipement utilisateur anticipe une chute de débit au-dessous d'une valeur de seuil prédéterminée, un identifiant de classe d'une qualité de service de priorité supérieure est identifié, un identifiant de classe d'une qualité de service ou une intensité de signal chute au-dessous d'un seuil, un appel à débit binaire garanti est déclenché, un transfert de l'équipement utilisateur vers une cellule congestionnée survient, un équipement utilisateur détermine qu'un élément de données dans la transmission de liaison descendante est classifié comme spam, un niveau de batterie de l'équipement utilisateur descend au-dessous d'un seuil prédéterminé, ou l'équipement utilisateur déclenche un service d'avant-plan de haute priorité.

12. Procédé selon la revendication 1 ou 5, dans lequel la requête comprend un élément de commande de commande d'accès au support ou un message de commande de ressources radio.

13. Appareil, comprenant :
des moyens pour recevoir (120), au niveau d'un noeud d'accès, en provenance d'un équipement utilisateur, une requête de purge de données dans au moins une partie d'une transmission de liaison descendante ou d'une transmission de liaison montante quand au moins un élément s'applique parmi : la congestion du réseau dépasse une valeur prédéfinie, ou un débit par utilisateur chute au-dessous d'une valeur de seuil prédéterminée, la requête comprenant au moins un attribut de ladite au moins une partie de la transmission de liaison descendante ou de la transmission de liaison montante ; et
des moyens pour purger (130), au niveau du noeud d'accès, des données dans ladite au moins une partie de la transmission de liaison descendante ou de la transmission de liaison montante sur la base dudit au moins un attribut.

14. Appareil, comprenant :
des moyens pour déterminer (110), par un équipement utilisateur, l'envoi d'une requête de purge de données dans au moins une partie d'une transmission de liaison descendante ou d'une transmission de liaison montante quand au moins un élément s'applique parmi :
la congestion du réseau dépasse une valeur prédéfinie, ou un débit par utilisateur chute au-dessous d'une valeur de seuil prédéterminée, la requête comprenant au moins un attribut de ladite au moins une partie de la transmission de liaison descendante ou de la transmission de liaison montante ; et
des moyens pour déclencher (120) la transmission de la requête de purge de données dans ladite au moins une partie de la transmission de liaison descendante ou de la transmission de liaison montante, sur la base dudit au moins un attribut, de l'équipement utilisateur à un noeud d'accès.
